# EUROPEAN PATENT SPECIFICATION

(11) **EP 2 199 199 B1**
(45) Date of publication and mention of the grant of the patent: **07.12.2011**
(21) Application number: 08021970.2
(22) Date of filing: 18.12.2008
(51) Int. Cl.: B63B 35/44, F03D 11/04

(54) **A hydroelectric turbine support system**
Stützsystem für eine hydroelektrische Turbine
Système de support de turbine hydroélectrique

(43) Date of publication of application: 23.06.2010
(73) Proprietor: OpenHydro IP Limited, Dublin 2 (IE)
(72) Inventor: Ives, James, Dublin 2 (IE); Dunne, Paul, Drumcondra Dublin 9 (IE)
(74) Representative: O'Neill, Brian

(56) References cited:
- EP-A- 1 980 670
- EP-A- 1 980 746
- GB-A- 2 431 628

## Description

### Field of the invention

The present invention is concerned with a hydroelectric turbine support system, and in particular the combination of a base on which the turbine is supported on the seabed, and a vessel used to transport the turbine and base to a deployment site, and which are designed to allow deployment from a larger number of onshore sites, for example from a relatively shallow quayside or from a slip.

### Background of the invention

Hydroelectric turbines are well known, and are generally deployed on the seabed in areas of high tidal flow in order to generate economic levels of electricity from the power of the tide. The use of hydroelectric turbines is now receiving significant attention due to the environmental damage that has been inflicted on the planet due to the long term use of fossil fuels such as coal and gas. Thus huge resources are being channeled into the development and deployment of renewable energy sources, for example hydroelectric power generation, and in particular tidal based hydroelectric generation.
The document EP 1 980 670, which is considered to be the closest prior art, discloses a method for the deployment of a hydroelectric turbine using tidal currents.

However, with the implementation of such new methods of generating power are not without there own challenges. Focusing in particular on the generation of electricity from tidal resources, there are significant obstacles to be overcome in both maintaining hydroelectric turbines in good working condition while located on the seabed, in addition to both deploying and retrieving the turbines. The locations of good tidal resources will rarely coincide with locations at which larger ports or the like are located, thus making it difficult to deploy and retrieve the turbines, which require the use of significant onshore resources.

It is therefore an object of the present invention to design a hydroelectric turbine support system which allows a greater number of locations to be used in the deployment/retrieval of hydroelectric turbines.

According to a first aspect of the present invention there is provided a hydroelectric turbine support system comprising a vessel for transporting the turbine to a deployment site; a base on which the turbine is supportable, the base and vessel being designed to allow the base to be retained beneath the vessel; wherein the base and vessel are adapted to facilitate the stable support of the vessel above the base when the system is partially or fully out of water.

Preferably, the base and vessel are designed to allow the base to support the vessel while the base is free standing.

Preferably, the vessel and the base are provided with complementary coupling portions.

Preferably, the coupling portions substantially prevent the relative movement of the base and vessel when the system is partially or fully out of water.

Preferably, the coupling portions comprise at least one projection provided on or formed integrally with the base and a complementary socket provided on or formed integrally with the vessel.

Preferably, the projection and/or socket are tapered to assist in locating the projection in the socket.

Preferably, the base comprises at least one leg an upper end of which defines one of the complementary coupling portions.

Preferably, the base is free standing on a lower end of the at least one leg.

Preferably, the base comprises three legs each of which defines one complimentary coupling portion.

Preferably, the vessel is adapted to allow the turbine to be mounted to and supported by the base while the base is mounted beneath the vessel and supporting the vessel.

According to second aspect of the present there is provided a method of supporting a hydroelectric turbine system comprising the steps of:
securing a base of the system beneath a vessel of the system;
positioning the system in a body of water at a location at which the water depth varies over time;
and allowing the base to contact and stand on a bottom of the body of water, and therefore support the vessel at least partially out of the water during periods of low water depth.

Preferably, the method comprises the steps of:
prior to securing the vase to the vessel, positioning the base of the system in a body of water;
locating the vessel above the base;
raising the base beneath the vessel to allow the base and vessel to be secured together.

Preferably, the method comprises the step of:
securing a turbine to the base once the base is secured beneath the vessel.

### Brief description of the drawings

Figure 1 illustrates a schematic representation of a hydroelectric turbine and support system according to a preferred embodiment of the present invention, and located at a first location during high tides;
Figure 2 illustrates the support system of figure 1 at low tide;
Figure 3 illustrates the hydroelectric turbine support system at a second location at high tide;
Figure 4 illustrates the support system of figure 3 at low tide;
Figure 5 illustrates the hydroelectric turbine support system of the present invention at a third location at high tide;
Figure 6 illustrates the support system shown in figure 5 at low tide;
Figure 7 illustrates the schematic representation of a base and vessel forming the system of the present invention, being brought together; and
Figure 8 illustrates a perspective view of the arrangement illustrated in figure 7.

### Detailed description of the drawings

Referring now to the accompanying drawings there is illustrated a hydroelectric turbine support system, generally indicated as (10), which is adapted to enable the deployment of a hydroelectric turbine (not shown) from a large number of onshore locations, and which also allows the system (10) to be stored in areas of shallow water during low tide which would otherwise be unsuitable for the location of such a water borne deployment system.

The system (10) comprises a vessel (12) and a base (14) which is locatable and retainable beneath the vessel (12) as described in detail hereinafter. The hydroelectric turbine (not shown) may then be mounted to the base (14) and the vessel (12) used to transport the base (14) and turbine to an offshore deployment site. The vessel (12), in the preferred embodiment illustrated, is in the form of a barge which is towed to the deployment site by a tug or other suitable vessel, although it will be appreciated that the vessel (12) may be self powered.

In the embodiment illustrated the base (14) comprises three legs (16) disposed in a triangular array and connected together by a number of horizontally disposed tubular struts (18). It will of course be appreciated from the following description of the invention that the base (14) may be of any other suitable configuration, and for example may comprise more than three legs (16).

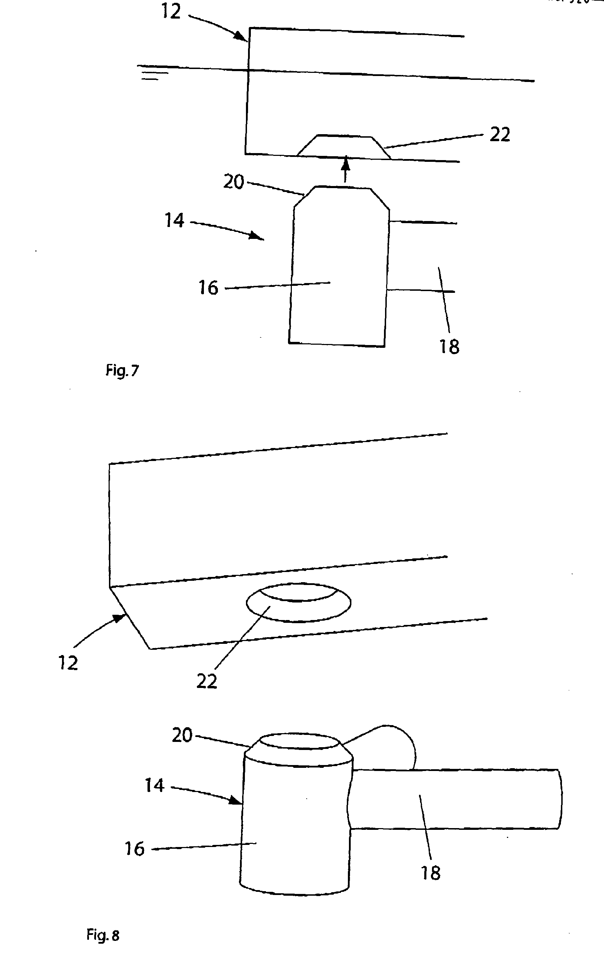

The base (14) and the vessel (12) are designed to define complimentary coupling portions which on the base take the form of a projection (20) formed at an upper end of each of the legs (16), as illustrated in figures 7 and 8. On the vessel (12) the complimentary coupling portions takes the form of sockets (22) which are preferably formed integrally with a pontoon (26) of the vessel (12). The sockets (22) may of course be provided at any other suitable location or portion of the vessel (12), in particular on an underside thereof. The sockets (22) must of course be positioned to align with the projections (20) when the base (14) is brought into register with the vessel (14). The projections (20) and sockets (22) are complimentary in shape, and are preferably tapered as illustrated in order to simplify the location of the projections (20) within the sockets (22). Any other suitable means of guiding the projections (20) and sockets (22) into register with one another may be employed, in order to reduce the level of precision required when manoeuvring the two parts of the system (10) into position with one another.

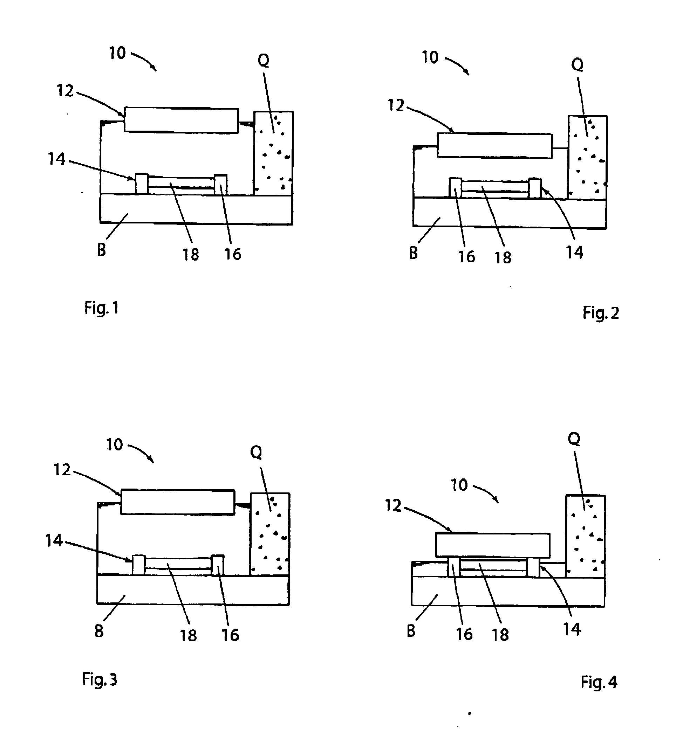

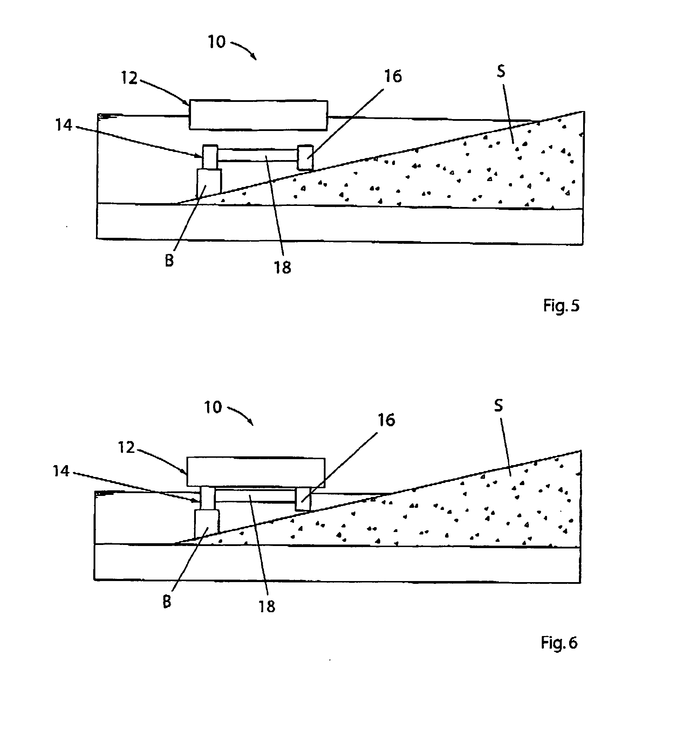

Turning then to the operation of the support system (10), the vessel (12) and base (14) are designed to have a complimentary fit with one another, and in particular the base (14) may be secured beneath the vessel (12) as illustrated in figures 4 and 6, such that the base (14) may be towed to a deployment site beneath the vessel (12). This provides the system (10) with a low centre of gravity and therefore significant stability, which is beneficial when manouevreing the system (10) is rough waters. In addition the vessel (12) and base (14) are designed such that the turbine (not shown) may be mounted on the base (14) while the base (14) is mounted beneath the vessel (12), and preferably such that the turbine is then located above and accessible from an upper deck of the vessel (12). This allows access to the turbine despite the base (14) being located underneath the vessel (12), allowing for any maintenance or last minute checks to be carried out on the turbine before deployment.

In the preferred embodiment illustrated in order to locate the base (14) beneath the vessel (12) the base (14) is first lowered onto the seabed (B), for example from a quay (Q) or the like as illustrated in figures 1-4. The vessel (12) is then floated into position above the base (14), and the base (14) winched into position directly beneath and in contact with the vessel (12). The vessel (12) and the base (14) are then secured to one another by any suitable means. It is however envisaged that the vessel (12) and base (14) may be secured together in this arrangement while on shore, and subsequently deployed into the water as a combined unit. However such a procedure would require larger transport and lifting equipment, and is therefore less desirable.

Referring in particular to figures 1-4 there are times when the system (10) will need to be retained at the quay (Q), whether for maintenance, testing, or some other reason, for extended periods. During the time that the system (10) is docked in the water at the quay (Q), the tide will be coming in and going out, thus resulting in variation in the depth of water at the quay (Q). Figures 1 and 2 illustrate the system (10) parked at a first location at the quay (Q), and showing the vessel (12) and base (14) separated from one another. Figure 1 illustrates the system (10) at the quay (Q) during high tide, showing adequate clearance between the vessel (12) and the base (14). Essentially what this means is that during low tide the system (10) will not "dry out", which means that the system (10) will remain in water deep enough to allow the vessel (12) to remain afloat and supporting the base (14) there beneath, with the base contacting the seabed (B). Figure 2 illustrates the system (10) at the same location during low tide. Again there is adequate clearance between the vessel (12) and the base (14). Thus at such a location there is no risk of the base (14) fouling the seabed (B) during low tide, which could result in damage to the system (10).

Turning now to figures 3 and 4, the system (10) is shown at a second location at the quay (Q). In figure 3 the system (10) is shown at the quay (Q) during high tide, and again there is adequate clearance between the vessel (12) and the base (14). However referring to figure 4, the system (10) is shown at the quay (Q) during low tide. In this location the vessel (12) and base (14) are shown in contact with one another and with the vessel (12) partially exposed or raised out of the water. This indicates that there is not sufficient water depth at this location to allow the vessel (12) to remain afloat with the base (14) secured there beneath, and without the base (14) contacting the seabed (B) at the quay (Q). However the system (10) of the present invention is designed to allow the base (14) to support the vessel (12) thereon when partially or fully out of the water, for example as illustrated in figure 4. In use as the tide recedes, the water level around the system (10) slowly drops until the legs (18) of the base (14) come into contact with the seabed (B). This will arrest the further drop of the system (1)) despite the continuing drop in water level. The weight of the vessel (12) will now begin to bear down on the base (14) as the vessel is partially or fully exposed by the dropping water. However, the legs (18) of the base (14), and the interface between the base (14) and the vessel (12) are designed to bear the load of the vessel (12) in a stable manner, as described in more detail hereinafter, allowing the system (10) to remain safely at such a location during low tide.

By providing the vessel (12) and the base (14) with the increased strength necessary to allow the vessel (12) to be borne by the base (14), the system (10) can be left at locations which would otherwise have insufficient water depth, during low tide, and which would therefore be unsuitable for deployment of the system (10). This significantly increases the number of locations at which the system (10) can be deployed without the risk of damage to the system (10) during low tide. If the system (10) were not so designed and was positioned at such a location during low tide, significant damage could occur to both the vessel (12) and the base (14) as a result of the base (14) carrying the full load of the vessel (12) thereon.

As well as providing sufficient structural reinforcement to the vessel (12) and base (14) to achieve the above mentioned support functionality, the vessel (12) and base (14) preferably defined a number of coupling portions in the form of the projections (20) and sockets (22), which enable interlocking of the vessel (12) and base (14). These coupling portions then prevent relative movement of the vessel (12) and base (14), in particular when standing out of the water. This ensures that the vessel (12) does not slide partially or fully off the base (14) when raised out of the water, even is position at a slight angle to the horizontal. It also allows work to be carried out on the vessel (12) and base (14), or the turbine (not shown) mounted to the base (14), when the system (10) is raised out of the water.

Referring now to Figures 5 and 6, the system (10) is shown in the water above a slip (S). Slips which are generally more widely used in areas of high tidal ranges, but make deployment of large systems relatively difficult, and which do not provide a suitable environment at which to dock such a system, for example for storage and/or maintenance or the like. However, the system (10) of the present invention may be deployed from and/or docked at such a slip (S) and at which during low tide the system (10) would be exposed, but can be left free standing as illustrated in Figure 6. It may be necessary, depending on the gradient of the slip (S) to position a block (B) beneath one or more of the legs (16) in order to maintain a substantially horizontal orientation of the system (10). The block (B) could be preinstalled at the free end of leg (18) prior to low tide. The system (10), including a turbine if mounted thereto, can then be serviced while positioned on the slip (S) and during periods of low tide. This arrangement will also leave the underside of the base (14) and vessel (12) accessible for maintenance/inspection or the like.

The design of the system (10) in the preferred embodiment illustrated is such that when free standing out of the water as illustrated in Figures 4 and 6, the majority of the weight of the vessel (12) is transferred directly through the legs (16). The legs (16), and in particular an underside thereof, are designed to allow the entire system to be stood freely out of the water while remaining stable, and to transfer most, if not all of the load of the vessel (12) to the ground on which the base (14) is standing. To this end, the vessel (12) and base (14) are preferably designed such that the vessel (12) contacts only the upper end of each of the legs (16) and preferably does not contact any of the struts (18) of the base (14). The upper end of the legs (16), in particular the projection (20), and the underside of the vessel (12), in particular the socket (22), are preferably suitably reinforced to bear the loads applied thereto when freestanding out of the water.

The present invention therefore provides a simple yet effective means of allowing a hydroelectric turbine system to stand freely out of the water without requiring any change in the position/orientation of the base (14) from the position in which it is normally stored beneath the vessel (12) for deployment purposes. This then increases the number of viable locations from which the system 10 can be deployed and/or serviced or the like.

## Claims

1. A hydroelectric turbine support system (10) comprising a vessel (12) for transporting the turbine to a deployment site; a base (14) on which the turbine is supportable **characterised by** the base and vessel being designed to allow the base to be retained beneath the vessel, and wherein the base and vessel are adapted to provide the stable support of the vessel above the base when the system is partially or fully out of water.

2. A hydroelectric turbine support system according to claim 1 in which the base and vessel are designed to allow the base to support the vessel while the base is free standing.

3. A hydroelectric turbine support system according to claim 1 in which the vessel and the base are provided with complementary coupling portions.

4. A hydroelectric turbine support system according to claim 3 in which the coupling portions substantially prevent the relative movement of the base and vessel when the system is partially or fully out of water.

5. A hydroelectric turbine support system according to claim 3 or 4 in which the coupling portions comprise at least one projection provided on or formed integrally with the base and a complementary socket provided on or formed integrally with the vessel.

6. A hydroelectric turbine support system according to claim 5 in which the projection and/or socket are tapered to assist in locating the projection in the socket.

7. A hydroelectric turbine support system according to claim 5 or 6 in which the base comprises at least one leg an upper end of which defines one of the complementary coupling portions.

8. A hydroelectric turbine support system according to claim 7 in which the base is free standing on a lower end of the at least one leg.

9. A hydroelectric turbine support system according to any of claims 6 to 8 in which the base comprises three legs each of which defines one complimentary coupling portion.

10. A hydroelectric turbine support system according to any preceding claim in which the vessel is adapted to allow the turbine to be mounted to and supported by the base while the base is mounted beneath the vessel and supporting the vessel.

11. A method of supporting a hydroelectric turbine system comprising the steps of:
securing a base of the system beneath a vessel of the system;
positioning the system in a body of water at a location at which the water depth varies over time;
and allowing the base to contact and stand on a bottom of the body of water, and
therefore support the vessel at least partially out of the water during periods of low water depth.

12. A method according to claim 11 comprising the steps of:
prior to securing the base to the vessel, positioning the base of the system in a body of water;
locating the vessel above the base;
raising the base beneath the vessel to allow the base and vessel to be secured together.

13. A method according to claim 11 or 12 comprising the step of:
securing a turbine to the base once the base is secured beneath the vessel.

## Patentansprüche

1. Abstützungssystem für eine hydroelektrische Turbine (10), das ein Schiff (12) zum Befördern der Turbine zu einer Einsatzstelle; und eine Basis (14) aufweist, auf der die Turbine abgestützt werden kann, **dadurch gekennzeichnet, dass** die Basis und das Schiff konfiguriert sind, damit die Basis unter dem Schiff gehalten werden kann, und wobei die Basis und das Schiff angepasst sind, um die stabile Abstützung des Schiffs über der Basis zu gewährleisten, wenn sich das System teilweise oder vollständig außerhalb des Wassers befindet.

2. Abstützungssystem für eine hydroelektrische Turbine nach Anspruch 1, bei dem die Basis und das Schiff konfiguriert sind, damit die Basis das Schiff abstützen kann, während die Basis frei steht.

3. Abstützungssystem für eine hydroelektrische Turbine nach Anspruch 1, bei dem das Schiff und die Basis mit komplementären Kopplungsteilen versehen sind.

4. Abstützungssystem für eine hydroelektrische Turbine nach Anspruch 3, bei dem die Kopplungsteile im Wesentlichen die relative Bewegung der Basis und des Schiffs verhindern, wenn sich das System teilweise oder vollständig außerhalb des Wassers befindet.

5. Abstützungssystem für eine hydroelektrische Turbine nach Anspruch 3 oder 4, bei dem die Kopplungsteile mindestens einen Vorsprung, der an der Basis vorgesehen oder integriert mit derselben ausgebildet ist, und eine komplementäre Buchse aufweisen, die an dem Schiff vorgesehen oder integriert mit demselben ausgebildet ist.

6. Abstützungssystem für eine hydroelektrische Turbine nach Anspruch 5, bei dem der Vorsprung und/oder die Buchse sich verjüngen, um das Anordnen des Vorsprungs in der Buchse zu unterstützen.

7. Abstützungssystem für eine hydroelektrische Turbine nach Anspruch 5 oder 6, bei dem die Basis mindestens einen Fuß aufweist, dessen eines oberes Ende einen der komplementären Kopplungsteile definiert.

8. Abstützungssystem für eine hydroelektrische Turbine nach Anspruch 7, bei dem die Basis freistehend auf einem unteren Ende des mindestens einen Fußes ist.

9. Abstützungssystem für eine hydroelektrische Turbine nach einem der Ansprüche 6 bis 8, bei dem die Basis drei Füße aufweist, von denen jeder einen komplementären Kopplungsteil definiert.

10. Abstützungssystem für eine hydroelektrische Turbine nach einem vorhergehenden Anspruch, bei dem das Schiff angepasst ist, um Anbringung der Turbine an und Abstützen derselben durch die Basis zuzulassen, während die Basis unter dem Schiff angebracht ist und das Schiff abstützt.

11. Verfahren zum Abstützen eines hydroelektrischen Turbinensystems, das die folgenden Schritte aufweist:
Befestigen einer Basis des Systems unter einem Schiff des Systems;
Positionieren des Systems in einem Wasserkörper an einer Stelle, an der die Wassertiefe im Verlauf der Zeit variiert;
und Zulassen, dass die Basis einen Grund des Wasserkörpers berührt und auf diesem steht, und deshalb das Schiff während Zeitspannen niedriger Wassertiefe wenigstens teilweise aus dem Wasser heraus abstützt.

12. Verfahren nach Anspruch 11, das die folgenden Schritte aufweist:
vor Befestigen der Basis an dem Schiff, Positionieren der Basis des Systems in einem Wasserkörper;
Anordnen des Schiffs über der Basis;
Anheben der Basis unter dem Schiff, um Befestigen der Basis und des Schiffs aneinander zuzulassen.

13. Verfahren nach Anspruch 11 oder 12, das den folgenden Schritt aufweist:
Befestigen einer Turbine an der Basis, nachdem die Basis unter dem Schiff befestigt wurde.

## Revendications

1. Système de support de turbine hydroélectrique (10) comportant un navire (12) permettant de transporter la turbine jusqu'à un site de déploiement ; une base (14) sur laquelle la turbine est en mesure d'être supportée, **caractérisé par** la base et le navire étant conçus pour permettre à la base d'être retenue sous le navire et dans lequel la base et le navire sont adaptés pour mettre en oeuvre le support stable du navire au-dessus de la base quand le système est partiellement ou entièrement hors de l'eau.

2. Système de support de turbine hydroélectrique selon la revendication 1, dans lequel la base et le navire sont conçus pour permettre à la base de supporter le navire alors que la base est auto portante.

3. Système de support de turbine hydroélectrique selon la revendication 1, dans lequel le navire et la base sont pourvus de parties d'accouplement complémentaires.

4. Système de support de turbine hydroélectrique selon la revendication 3, dans lequel les parties d'accouplement empêchent sensiblement le mouvement relatif de la base et du navire quand le système est partiellement ou entièrement hors de l'eau.

5. Système de support de turbine hydroélectrique selon la revendication 3 ou la revendication 4, dans lequel les parties d'accouplement comportent au moins une partie saillante mise en oeuvre sur la base ou formée d'une seule pièce avec celle-ci et une douille complémentaire mise en oeuvre sur le navire ou formée d'une seule pièce avec celui-ci.

6. Système de support de turbine hydroélectrique selon la revendication 5, dans lequel la partie saillante et/ou la douille sont coniques pour faciliter le positionnement de la partie saillante dans la douille.

7. Système de support de turbine hydroélectrique selon la revendication 5 ou la revendication 6, dans lequel la base comporte au moins un montant dont une extrémité supérieure définit l'une des parties d'accouplement complémentaires.

8. Système de support de turbine hydroélectrique selon la revendication 7, dans lequel la base est auto portante sur une extrémité inférieure dudit au moins un montant.

9. Système de support de turbine hydroélectrique selon l'une quelconque des revendications 6 à 8, dans lequel la base comporte trois montants, chacun définissant une partie d'accouplement complémentaire.

10. Système de support de turbine hydroélectrique selon l'une quelconque des revendications précédentes, dans lequel le navire est adapté pour permettre à la turbine d'être montée sur la base et d'être supportée par celle-ci quand la base est montée sous le navire et qu'elle supporte le navire.

11. Procédé permettant de supporter un système de turbine hydroélectrique comportant les étapes consistant à :
assujettir une base du système sous un navire du système ;
positionner le système dans une masse d'eau en un lieu où la profondeur de l'eau varie dans le temps ;
et permettre à la base d'entrer en contact avec un fond de la masse d'eau et de se tenir sur celui-ci, et par conséquent de supporter le navire au moins partiellement hors de l'eau pendant des périodes de faible profondeur d'eau.

12. Procédé selon la revendication 11 comportant les étapes consistant à :
avant l'assujettissement de la base au navire, positionner la base du système dans une masse d'eau ;
placer le navire au-dessus de la base ;
soulever la base sous le navire pour permettre à la base et au navire d'être assujettis ensemble.

13. Procédé selon la revendication 11 ou la revendication 12 comportant l'étape consistant à :
assujettir une turbine à la base une fois que la base est assujettie sous le navire.
